# EUROPEAN PATENT SPECIFICATION

(11) **EP 0 636 084 B1**
(45) Date of publication and mention of the grant of the patent: **11.10.1995**
(21) Application number: 93909368.8
(22) Date of filing: 13.04.1993
(51) Int. Cl.: B63B 1/32, B63B 1/10

(54) **TWIN HULL WATERCRAFT WITH AERODYNAMIC-LIFT PRODUCING SUPERSTRUCTURE**
DOPPELRUMPFWASSERFAHRZEUG MIT AERODYNAMISCHE AUFTRIEBSKRAFT ERZEUGENDEM AUFBAU
BATEAU A COQUE DOUBLE ET A SUPERSTRUCTURE PRODUISANT UNE FORCE DE SUSTENTATION AERODYNAMIQUE

(30) Priority: 17.04.1992 IT GE920047
(43) Date of publication of application: 01.02.1995
(73) Proprietor: ROCCOTELLI, Sabino, I-00141 Roma (IT)
(72) Inventor: ROCCOTELLI, Sabino, I-00141 Roma (IT)
(74) Representative: Petruzziello, Aldo
(86) International application number: EP9300895
(87) International publication number: WO9321060

(56) References cited:
- DE-A- 3 918 054
- GB-A- 1 453 663
- US-A- 2 343 645
- US-A- 3 965 836
- US-A- 4 779 820
- US-A- 4 964 357

## Description

The object of the present invention is a twin hull marine or naval craft with reduced displacement, owing to the effect of aerodynamic lift of the part above the water surface.

At present, naval crafts are well known of the SWATH type (Small Waterplane Area Twin Hull), consisting of a pair of completely immersed fusiform hulls supporting a spacious load platform above waterplane by means of elongated vertical structures.

The reduced horizontal section of the above mentioned two load bearing structures reduces the wave resistance of the craft which has, in addition, high stability, since the horizontal load bearing structure is located, within determined limits, above the wave motion contour.

If, on the one hand, a vehicle of such type allows even drastic reduction in wave resistance, the two immersed fusiform hulls must still produce a thrust equal to the weight of the whole structure, and for this reason it is not possible to reduce surface friction.

Land and naval vehicles are also well known of the type called WIG (Wing in Gound effect Vehicle), which, by means of appropriately distributed load bearing contours, allow the weight of the vehicle to be partially or totally supported by aerodynamic effect, allowing higher transport speeds, for a same installed horsepower. The operational limit of this type of naval craft resides in the fact that the lift depends solely on the wing contours described, and this requires prohibitive dimensions or installed horsepower much higher than that installed in an ordinary land vehicle, and also involves problems of inadequate transverse stability, with the result that the increase in speed compensates only in part for the operational limits arising from greater dimensions and other limitations.

GB-A 1 453 663 discloses a marine craft which is not basically a SWATH, but a "HYDROFOIL" vessel, as its vertical sides, which support the hull, are provided with a plurality of hydrofoils providing a hydrodynamic lift of the vessel. As it is clearly apparent from the drawings of this document, no immersed fusiform hulls typical of the SWATH are provided at the base of the vertical sides.

The load platform of this vessel generates an aerodynamic lift which, however, is not decisive for the vessel lift, this being substantially due to the said hydrofoils.

The aim of the present invention is to realize a naval craft which, while eliminating the limits of the two vehicles described above will allow full use to be made of its functional features.

The essential characteristics of the naval craft claimed are summarized and outlined in the attached claim 1. The new marine craft of the invention overcomes the drawbacks of the above described prior art vehicles, has reduced wave resistance and reduced surface friction; other aims and advantages of the same will be apparent from the dependent claims and also from the description given below, relating to embodiments chosen merely for the sake of example, and in which:
Figure 1 is a frontal view of the claimed naval craft according to a preferred embodiment;
Figure 2 is a side view of the same embodiment shown in the previous figure 1, with some portions omitted for sake of clarity.

With particular reference to such figures, two completely immersed fusiform bodies are shown with 10, from which two vertical elongated and slender load bearing structures 11 project upwards, with their horizontal section reduced to a minimum, in compatibility with their structural functions, for the purpose of reducing wave resistance.

The two elongated vertical structures 11 support a load platform 12, which can be intended both for transporting passengers or any other pay cargo. The structure just described, 10, 11, and 12, substantially realizes a typical SWATH type marine vehicle, whose operational limits have been described above.

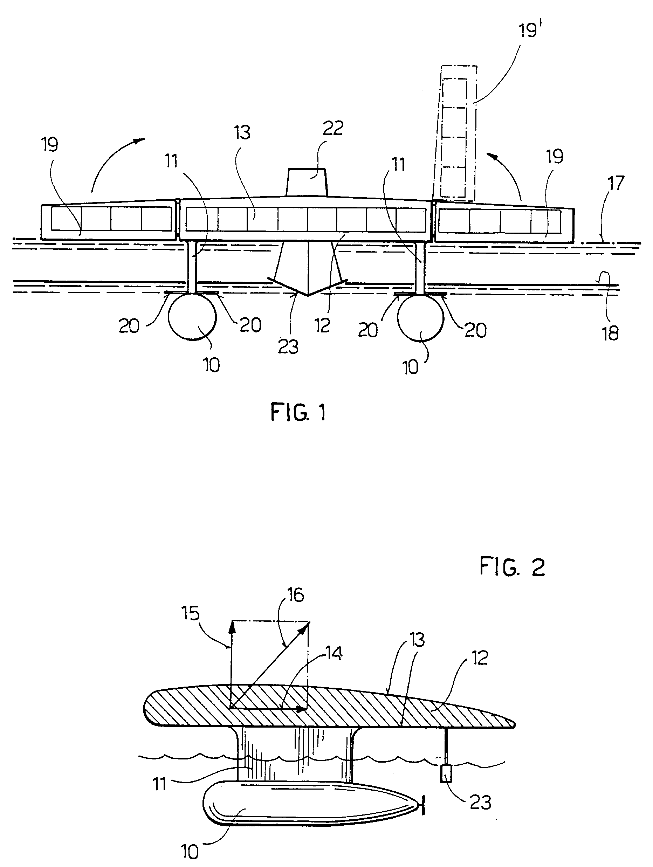

According to the present invention, the platform 12 has its vertical longitudinal section shaped as a wing contour or aerofoil as outlined by the hatched area 13 of figure 2. As the vehicle advances at a general velocity (V), the said wing contour causes a drag 14 and a lift 15, with a resultant 16.

The lift 15 allows part of the weight of the naval vehicle to be absorbed, and therefore, at the speed (V) mentioned, the displacement of the immersed part of the hull, corresponding to the waterplane 18, will be smaller than the weight of the naval craft which at zero velocity has a waterplane higher that the base line, for example the waterplane 17.

According to a first modified embodiment, the platform 12 can extend laterally beyond the vertical load bearing structures 11, in the form of projections 19, maintaining the wing contour section shown in the hatched area of figure 2.

This results in a greater lift and hence lower surface friction of the immersed part of the hull.

To avoid the consequent greater dimensions, the lateral projections 19 can be folded upwards during coming alongside and mooring operations, when speed is obviously very slow or even zero.

The folded up position of the lateral wing projections 19 is shown with dash-dot lines 19' in figure 1.

In a further modified embodiment, the load bearing vertical structures 11 can be provided with immersed wings 20 which add a hydrodynamic lift to the aerodynamic lift of the wing contours 12 and 19.

In figure 1, 22 is a cabin, and 23 a foil or hydrofoil.

## Claims

1. A marine craft of a type called SWATH having a completely immersed fusiform twin hull (10, 10), from which project vertical support structures (11, 11) for a load platform (12), characterized in that the said load platform (12) extends laterally beyond said vertical structures (11, 11) with projecting parts (19, 19) and has a wing contour (13) as its vertical longitudinal section, suitable for producing an aerodynamic lift.

2. A marine craft, according to claim 1, characterized in that the said wing contour load platform (12) extends also longitudinally beyond said vertical structures (11, 11).

3. A marine craft, according to claim 1 or 2, characterized in that said two projecting parts (19, 19) of the load platform can be bent upwards.

4. A marine craft, according to the previous claims, characterized in that said vertical support structures (11, 11) are provided with immersed wings (20).

## Patentansprüche

1. Meeresfahrzeug mit doppeltem spindelförmigem und vollständig unter Wasser liegendem Bootskörper (10, 10), aus dem senkrechte Tragstrukturen (11, 11) emporsteigen, auf denen sich eine Ladeplattform (12) befindet, deren Typ SWATH genannt wird; es zeichnet sich dadurch aus, daß jene Ladeplattform (12) seitlich über jene senkrechten Träger (11, 11) mit ausragenden Teilen (19, 19) hinausreicht, und daß ihr senkrechter Längsschnitt ein Flügelprofil (13) ergibt, mit aerodynamischer Wirkung.

2. Meeresfahrzeug laut Anspruch 1, es zeichnet sich dadurch aus, daß gesagte Ladeplattform (12) mit Flügelprofil sich auch der Länge nach über gesagten senkrechten Strukturen (11, 11) erstreckt.

3. Meeresfahrzeug laut dem Anspruch 1 oder 2, es zeichnet sich durch die Tatsache aus, daß gesagte ausragende Teile (19, 19) der Ladeplattform nach oben gebogen sein können.

4. Meeresfahrzeug gemäß den obigen Ansprüchen, es zeichnet sich durch die Tatsache aus, daß gesagte senkrechte Tragestrukturen (11, 11) über ins Wasser tauchende Flügel (20) verfügen.

## Revendications

1. Une embarcation, type appelé SWATH, dotée d'une double coque fusiforme (10, 10) totalement immergée, dont dépassent des structures verticales de support (11,11) pour une plate-forme de chargement (12), caractérisée par le fait que cette plate-forme de chargement (12) s'étend latéralement au-delà ce ces structures verticales (11,11) avec des parties en saillie (19,19) et a, comme section longitudinale verticale, un profil en forme d'aile (13) permettant de réaliser une sustentation aérodynamique.

2. Une embarcation suivant la revendication 1, caractérisée par le fait que cette plate-forme de chargement (12) à profil en forme d'aile s'étend longitudinalement au-delà des structures verticales (11.11)

3. Une embarcation suivant les revendications 1 et 2, caractérisée par le fait que les deux parties en saillie (19, 19) de la plate-forme de chargement peuvent être pliées vers le haut.

4. Une embarcation suivant les revendications précédentes caractérisée par le fait que ces structures verticales de support (11,11) sont dotées d'ailes immergées (20)
